(19) **Europäisches Patentamt**

**European Patent Office**

**Office européen des brevets**

(11) **EP 1 274 055 A1**

(12) **EUROPEAN PATENT APPLICATION**

(43) Date of publication:
08.01.2003 Bulletin 2003/02

(51) Int Cl.⁷: **G07F 19/00**

(21) Application number: **01810659.1**

(22) Date of filing: **05.07.2001**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI** | (72) Inventors:<br>• **Van Herreweghen, Els**<br>  **8810 Horgen (CH)**<br>• **Ludwig, Heiko H.**<br>  **8032 Zurich (CH)** |
| (71) Applicant: **International Business Machines Corporation**<br>**Armonk, NY 10504 (US)** | (74) Representative: **Williams, Julian David**<br>**International Business Machines Corporation,**<br>**Säumerstrasse 4**<br>**8803 Rüschlikon (CH)** |

(54) **Method and system for confirming the fulfillment of a transition condition in electronic transactions**

(57) The present invention provides a system and method for confirming the fulfillment of a transition condition in a workflow management system (WFMS) by a device connectable to the workflow management system via a network. The transition condition comprises an application transition condition and a fulfillment condition. The fulfillment condition comprises a requirement of a signature for confirming the application transition condition. The method comprises confirming at least part of the fulfillment of the application transition condition by signing with the signature that the application transition condition has been fulfilled.

Fig. 3

## Description

TECHNICAL FIELD

The present invention is related to a method and system for confirming the fulfillment of a transition condition in electronic transactions. More particularly the invention relates to an access to a process in a workflow management system.

BACKGROUND OF THE INVENTION

Workflow processes and applications are well known in the art and operate with different media. Typical electronic workflow control applications, also referred to as Workflow Management Systems, are available commercially in various types and from various sources, e.g. in the form of specialized systems, such as MQ Series Workflow® from IBM or TeamFlow® from ICL, or as parts of so-called Enterprise

Resource Planning Systems, such as R3® by SAP and Baan® by The Baan Company.

Under the term workflow management system (WFMS) is understood a system that completely defines, manages and executes workflow processes through the execution of software whose order of execution is driven by a computer representation of the workflow process logic. The WFMS performs processes comprising activities (e.g. programs, tasks for humans via a client) and transitions. Usually, several activities lead to a transition condition in order to trigger a further activity or the execution of the further activity.

For the purpose of this specification, the terms "server" and "server computer" are used synonymously and refer to an electronic computer which functions as a "host" computer and is capable of being operatively connected with one or more "clients" (short for "client computer"). The connection of a server and at least one client results in a "net" (short for interconnected electronic computers).

In complex electronic processes executed using a WFMS, transitions from one process activity to the following one may be subject to certain human-verifiable and subjective conditions. This makes it difficult to verify their correct execution in an automated and indisputable way. It also allows uncertainty between the parties about their respective views on the process state, and opens the door for disputes after the fact, where one party claims a certain subjective condition was not met (and the other party cannot prove it was). It also makes it difficult, within one party's system, to trace in a secure way which parties (e.g. human experts) verified and evaluated which conditions, and to make sure only authorized parties can enter the evaluation of a condition into the WFMS. Hence, there is a call for a method and system where in a secure way only authorized parties can enter certified evaluation results of conditions into the system. This should be traceable and the parties should be able to prove to their transaction peer or to a third party the evaluation of a condition and by whom it was made which is called nonrepudiation. In other words nonrepudiation prevents the sender of information from claiming at a later date that the information was never sent. Moreover, the parties should have the possibility to exchange certified evaluation results, allowing them to securely synchronize on a mutually-agreed and provable state.

SUMMARY AND ADVANTAGES OF THE INVENTION

In accordance with the present invention, there is provided a system and method for confirming the fulfillment of a transition condition in a workflow management system (WFMS) by a device connectable to the workflow management system via a network, the transition condition comprising an application transition condition and a fulfillment condition, the fulfillment condition comprising a requirement of a signature for confirming the application transition condition, the method comprising confirming at least part of the fulfillment of the application transition condition by signing with the signature that the application transition condition has been fulfilled.

In general, the transition condition is a condition for the WFMS to change its state from one state to another, i.e. move on to the next process step. The transition condition is extended with a parameter or field, here the signature for confirming the application transition condition, indicating an access control specifying who may enter the evaluation of the application transition condition into the WFMS. The parties or users having access control can be human experts; all possible evaluators have a signature key and can be registered with a trusted authority who certified their attributes (e.g., expertise, possible evaluations it is authorized to make) and the signature verification key. The (human-driven) procedure for entering the evaluation result of an application transition condition is enhanced such that the result of the evaluation is signed with the evaluator's signature key. The signed evaluation is stored in the WFMS. The state transition only takes place if one or several signatures are correct and are made by a party or user who is authorized to do so, subject to an access control list. If the signed evaluation is made by a business partner or a third party, it can be used as a proof in disputes.

The method shows the advantage that an access control mechanism is implemented such that a high degree of nonrepudiation is achieved, i.e., after signing with the signature it is difficult for a signer to deny having signed the evaluation result or the application transition condition. In general the invention achieves in a secure way that only authorized parties or users can enter certified evaluation results of conditions into the WFMS. Each signed evaluation is traceable and it can be verified which party performed it. Moreover, each party can prove to their peer or to any third party the evaluation of a condition, i.e. the fulfillment of the application transition condition, and by whom it was made. The parties can exchange certified evaluation results, allowing them to securely synchronize on a mutually-agreed and provable state.

If several parties have to sign in order to effect the transition condition, each party can sign and therewith confirm the application transition condition independently from time and place without any order. This leads to a flexible WFMS. It is advantageous that the transition condition can be effected and controlled externally. This is achieved by an additional interface accessing the WFMS. The access to the WFMS is provided only to authorized parties or users. This can be achieved by the access control list that is stored by the WFMS. The access control list indicates who has to sign the application transition condition. In praxis, a server stores values or names that represent one or more persons who has/have to sign the application transition condition. These values or names of the access control list are used to compare it with each value or name received with the signature in response to the fulfillment of the application transition condition. The value or name added to the signature is referred to as identifier. Each identifier reveals an identity (a real identity, a pseudonym, or, a role or right) and can be certified, i.e. linked to a signature verification key, by a certificate authority as mentioned above. Certificate authorities (CAs) are entities that validate identities and issue certificates. They can be either independent third parties or organizations running their own certificate-issuing server software.

The signature can be derived, for example by using a one-way hash function, from at least one or more application transition conditions and a cryptographic key or signature key. This leads to a simple structure of the signature to which the identifier is added. In general, a signature or digital signature is unique to the message it accompanies. If the message received differs in any way from the message that was sent the digital signature cannot be validated. Therefore, signed information or data provide assurance that the information or data has not been tampered with. In other words, signed information or data makes it very difficult for the sender to deny having sent the message.

The cryptographic key can be a shared key that is known to the WFMS. In this case a symmetric cryptographic system can be applied. The cryptographic key can be a public key that is known to the WFMS. In this case a asymmetric cryptographic system comprising public and private keys can be applied.

A process running at the WFMS can be accessed by an external device. The device can be a mobile device or any other device able to derive and send a signature to a server of the WFMS.

The basic scheme of access control for certified evaluations can also be applied to non-transaction contexts, i.e. they can be applied to any process that needs certain inputs to fulfill transition conditions.

## DESCRIPTION OF THE DRAWINGS

Preferred embodiments of the invention are described in detail below, by way of example only, with reference to the following schematic drawings.

**FIG. 1** shows a schematic illustration of a system according to the present invention.

**FIG. 2** shows a schematic illustration of a process running at a workflow management system.

**FIG. 3** shows a schematic illustration of a further embodiment of the workflow management system.

**FIG. 4** shows a variation of the embodiment described with reference to Fig. 3.

The drawings are provided for illustrative purpose only and do not necessarily represent practical examples of the present invention to scale.

## DETAILED DESCRIPTION

In the following, the various exemplary embodiments of the invention are described. The same reference numerals are used to denote the same or like elements.

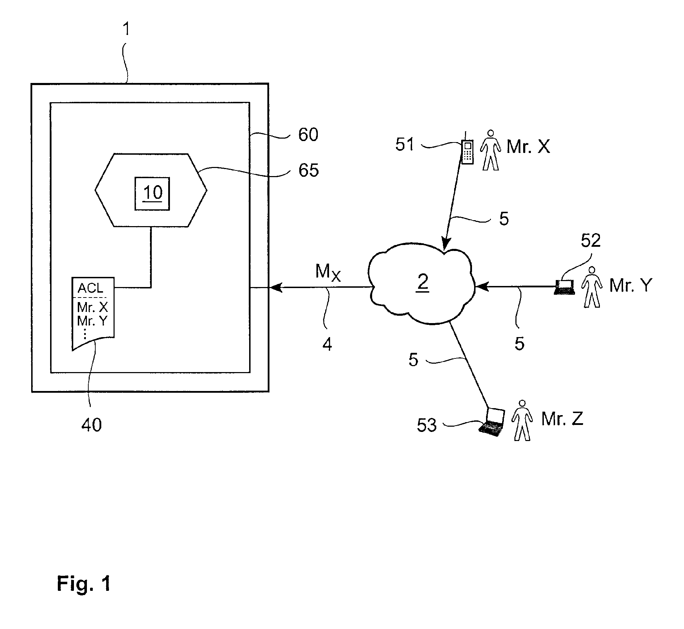

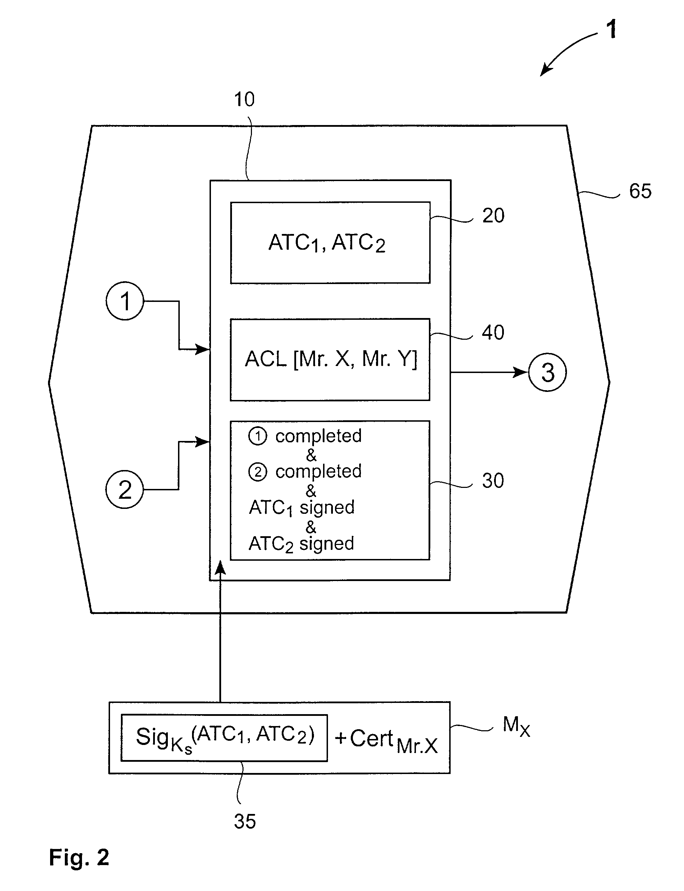

Fig. 1 shows a schematic illustration of a system for confirming the fulfillment of a transition condition 10 in a workflow management system 1, abbreviated as WFMS. The system comprises a server 60 connected to a network 2 via connection means 4. The WFMS 1 stores an access control list 40 and performs here, for example, a process 65. The process 65 has access to the access control list 40. A first device 51 owned by Mr. X , a second device 52 owned by Mr. Y, and a third device 53 owned by Mr. Z are connectable to the network 2 via known connection links 5, e.g. radio frequency (RF), for accessing the process 65. The devices 51, 52, 53 for accessing the WFMS 1 can be any suitable device such as a mobile phone, including a WAP phone, a personal digital assistant (PDA), or any computer device being able to compute and send signed data and a certificate, identifier, or name to the WFMS 1. The figure indicates a simplified message $M_X$ sent by Mr. X that confirms an application transition condition 20 comprising $ATC_1$, $ATC_2$ (not shown). The message $M_X$, as shown in more detail in Fig. 2, could read as follows:

$$\mathrm{sig}_{K_s}(ATC_1, ATC_2) + \mathrm{Cert}_{Mr.X}$$

with $K_S$ the applied secret or private signature key, $\mathrm{Cert}_{Mr.X}$ the identifier or certificate of Mr. X certifying Mr. X's public signature verification key $K_P$, and $\mathrm{sig}_{K_s}$ the signature using $K_S$ on $ATC_1$, $ATC_2$. It is assumed here and in the following that any potential verifier of $\mathrm{sig}_{K_s}$

knows or can obtain the cleartext content, which here is $ATC_1$, $ATC_2$, e.g., the verifier has access to the transition condition 10 or the cleartext contents are included as part of sig $_{Ks}$.

Fig. 2 indicates the process 65 running within the WFMS 1 in which the transition condition 10 comprises the application transition condition 20, indicated by $ATC_1$, $ATC_2$, and a fulfillment condition 30. The fulfillment condition 30 requires here the fulfillment of a first and second process ① ,② and a requirement of a signature 35 for confirming the application transition condition 20, as indicated by ① *completed &* ② *completed & ATC_1 signed & ATC_2 signed.* The fulfillment of the application transition condition 20 is confirmed by signing with the signature 35 that the application transition condition 20 has been fulfilled as indicated in the figure. In the example, the content of the message $M_X$ sent by Mr. X indicates that the fulfillment of the application transition condition 20, i.e. $ATC_1$, $ATC_2$, has been confirmed by Mr. X.

In general, there are process steps, here indicated by ① ,② . The fulfillment of the transition condition 10 causes the WFMS 1 to proceed to a further step, indicated by ③ . In the example, the transition condition 10 is triggered by the fulfillment of the fulfillment condition 30 that includes the signed application transition condition $ATC_1$ and $ATC_2$ provided by the content of the message $M_X$ which comprises the identifier $Cert_{Mr. X}$. The access control list 40 mentioned above indicates who has to sign the application transition condition 20. In other words, the access control list 40 stores values that represent a name, role, person, or entity, short Cert, who has to sign the application transition condition 20. The matching is verified by the server 60 of the WFMS 1 after receiving the message $M_X$ including the signed application transition condition 20 and the identifier Cert. For example, the access control list 40 stores here the identifiers Cert of Mr. X AND Mr. Y or Mr. X OR Mr. Y depending on the access control definition. For the fulfillment of the transition condition 10, in the AND case both, i.e. Mr. X and Mr. Y, have to send a message and in the OR case Mr. X or Mr. Y has to send a message including the signed application transition condition 20 and their identifiers Cert. For implementation purposes of the access control list 40 an X.509 certificate that binds a distinguished name to a public key could be employed.

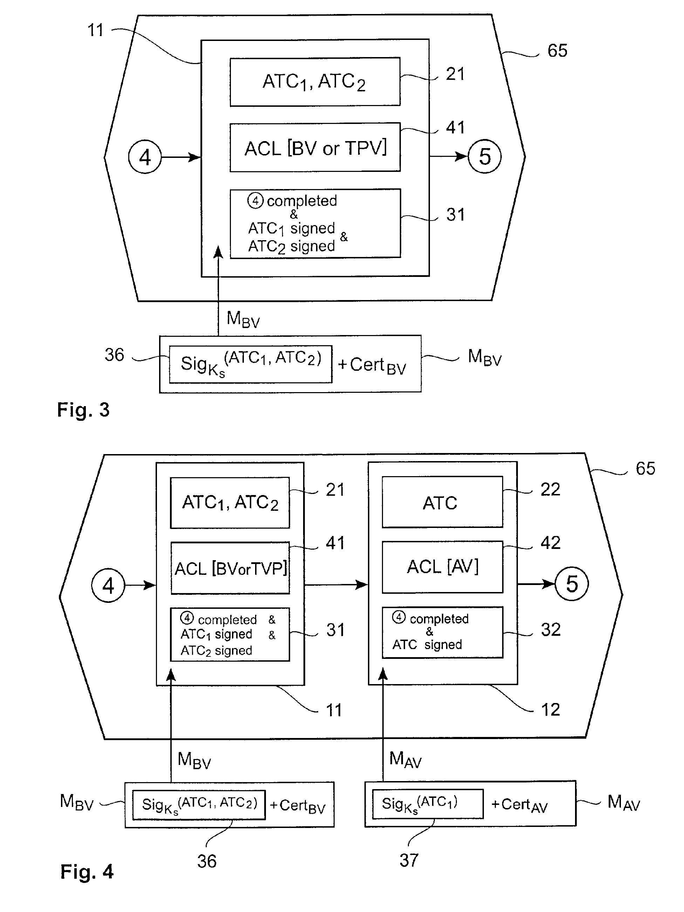

Fig. 3 shows a schematic illustration of a further embodiment of the workflow management system 1.

Assumed is the process 65 running at the WFMS 1 of a first party A (not shown) specifying steps, deadlines and transition conditions for A constructing an office building for a second party B (not shown). The process 65 relies on a contract, in which B has committed to pay an amount of money to A on a condition that the first floor of a building X is ready to be taken in use by B's employees. Fig. 3 indicates the process 65 in which the transition condition 11 comprises the application transition condition 21, indicated by $ATC_1$, $ATC_2$, and the fulfillment condition 31. The fulfillment condition 31 comprising a requirement of a signature 36 for confirming the application transition condition 21 and the completion of process ④ is here stated as ④ *completed & ATC_1 signed & ATC_2 signed.* The fulfillment of the application transition condition 21 is confirmed by signing with the signature 36 that the application transition condition 21 has been fulfilled as indicated in the figure. The conditions $ATC_1$ = 'walls are painted' and $ATC_2$ = 'the first floor of building X is ready' are the application transition condition 21 and may be defined in more detail, but ultimately the application transition condition 21 or its components will have to be verified and signed by a human verifier or evaluator on behalf of B. The first party A, in its turn, will not continue building the other floors without acknowledgment from B that B agrees with the readiness of the first floor (and thus has committed to pay).

At this point, the following requirements should arise for correct and secure verification of the application transition condition 21:

An employee of B, or a third party agreed by B and A, should verify readiness of the building; A would like to know B's verification results and would like to make sure that B cannot change its mind about this result in possible future disputes, i.e. the first party A would like to have proof of the verification result (by B or by the third party).

The following outlines the application of the above example.

Notation: ACL stands for the access control list 41 but may represent any access control restriction based on, e.g., entities, parties, users, roles and/or attributes. The ACL 41 stores here the identifiers Cert of [BV or TVP]. For the fulfillment of the transition condition 11, BV or TVP has to send a message. Indicated is the message $M_{BV}$ including the signature 36 and the identifier $Cert_{BV}$.

In the example, it is assumed that the ACL 41 comprises entities such as BV = B's verifier or evaluation entity. But BV could stand for 'any entity who has as attribute BV = can verify or evaluate for B; of course there may be different attributes for different types of evaluations.

Looking at the WFMS 1, there is the following application transition condition 21, short indicated as $ATC_{1,2}$:

$ATC_{1,2}$ = (Description = 'walls are painted' and 'the first floor of building X is ready', ACL = [BV or TPV])

This means that the first party A will only continue building, indicated by a fifth process step ⑤ , after this application transition condition 21 has been evaluated true by B's verifier BV or a third-party verifier TPV, with

- BV = identity of an entity allowed to verify for the second party B, and
- TPV = identity for the third-party verifier agreed upon by the first party A and the second party B.

One or more of these verifiers BV, TPV can enter a condition evaluation into the WFMS 1. Alternatively ACL 41 could specify [BV and TPV] meaning that both BV and TPV have to evaluate the condition TRUE in order to trigger the transition condition 11.

For the case of 'BV' evaluating: an employee of B with role or identity BV can enter the evaluation, i. e. the application transition condition 21 here 'walls are painted' and 'the first floor of building X is ready', potentially triggering the fulfillment condition 31.

For the case of 'TPV' evaluating: an entity with role or identity TPV performs the evaluation and sends its signed evaluation, i.e. the signed application transition condition 21 here 'walls are painted' and 'the first floor of building X is ready', to B who enters it into the WFMS 1, e.g. by the device 51, 52, 53, potentially triggering the fulfillment condition 31.

More concretely, a signed evaluation can also be represented as

SignedEvaluation = SIGevaluator(ATC, Transition-id, Evaluation), CERTevaluator) ; with Transition-id the identifier of the WFMS process ① ,② ,③ ,④ ,⑤ . SIGevaluator is the signature 36 with the Evaluator's private signature key, and CERTevaluator the certificate certifying the Evaluator's public verification key.

Applying the principles above, SignedEvaluation, i.e. the signed application transition condition 21 can now be entered in the WFMS 1, the correctness of SIGevaluator will be verified as well as Evaluator's authorization according to ACL 41 in the transition condition 11.

Fig. 4 shows a slight variation of the previous embodiment where the transition of the process 65 is subject to two transition conditions 11, 12 related to different access control lists 41, 42. The process 65 comprises additionally a further transition condition 12 comprising its application transition condition 22, indicated by ATC, and its fulfillment condition 32.

The application transition condition 22, here short ATC indicates:

ATC = (Description = 'payment received', ACL = [AV]) ; with AV an identity of an entity in A's accounting department allowed to sign that the payment is received.

This means that also the second party B needs to have paid in order for the first party A to continue building, which is indicated by the fifth process step ⑤ . The fulfillment condition 32 comprising the completion of process ④ and a requirement of a signature 37 for confirming the application transition condition 22 is here indicated as ④ *completed & ATC signed.* The fulfillment of the application transition condition 22 is confirmed by signing with the signature 37 that the application transition condition 22 has been fulfilled as indicated in the figure. In the example, the content of the message $M_{AV}$ sent by AV confirms that the application transition condition 22, i.e. ATC = 'payment received', has been fulfilled by A's accounting department.

The above described systems allow to trace in a secure way which parties (e.g. human experts) verified and evaluated which conditions, and makes sure only authorized parties can enter the evaluation of a condition, i.e. the application transition condition 20, 21, 22, into the WFMS 1.

Alternatives:

The examples above describe a secure embodiment. However, if some of the functional or security requirements can be relaxed, it is possible to propose alternatives for different parts of the WFMS 1:

- The actions taken upon entering an evaluation condition by a non-authorized users can be many. In the above examples, it is assumed that the transition could not be triggered if this occurs. There may be other configuration choices, however, e.g., the transition may be triggered anyway but an alarm is raised or a log entry filed.
- Part of the solution can also be achieved using a shared-key cryptographic system as opposed to the public-key cryptographic system as assumed in the above examples. When using a shared-key cryptographic system, the 'signatures' on the application transition conditions 20, 21, 22 are shared-key signatures (such as keyed one-way functions). All the evaluators or users in one party's system then have a shared key which is also stored in a central database and which can be used to authenticate/sign the application transition conditions 20, 21, 22.

Any disclosed embodiment may be combined with one or several of the other embodiments shown and/or described. This is also possible for one or more features of the embodiments.

The present invention can be realized in hardware, software, or a combination of hardware and software. Any kind of computer system - or other apparatus adapted for carrying out the method described herein - is suited. A typical combination of hardware and software could be a general purpose computer system with a computer program that, when being loaded and executed, controls the computer system such that it carries out the methods described herein. The present invention can also be embedded in a computer program product, which comprises all the features enabling the implementation of the methods described herein, and which - when loaded in a computer system - is able to carry out these methods.

Computer program means or computer program in the present context mean any expression, in any language, code or notation, of a set of instructions intended to cause a system having an information processing capability to perform a particular function either directly or after either or both of the following a) conversion to another language, code or notation; b) reproduction in a different material form.

## Claims

1. Method for confirming the fulfillment of a transition condition (10, 11, 12) in a workflow management system (1) by a device (51, 52, 53) connectable to the workflow management system (1) via a network (2), the transition condition (10, 11, 12) comprising an application transition condition (20, 21, 22) and a fulfillment condition (30, 31, 32), the fulfillment condition (30, 31, 32) comprising a requirement of a signature (35, 36, 37) for confirming the application transition condition (20, 21, 22), the method comprising confirming at least part of the fulfillment of the application transition condition (20, 21, 22) by signing with the signature (35, 36, 37) that the application transition condition (20, 21, 22) has been fulfilled.

2. Method according to claim 1 further comprising storing an access control list (40, 41, 42) indicating who has to sign the application transition condition (20, 21, 22).

3. Method according to claim 1, wherein signing with the signature (35, 36, 37) further comprises adding an identifier (Cert).

4. Method according to claim 1 further comprising comparing the content of the access control list (40, 41, 42) with each identifier (Cert) in response to the fulfillment of the application transition condition (20, 21, 22).

5. Method according to claim 1, wherein the signature (35, 36, 37) is derived from at least one or more application transition conditions (20, 21, 22) and a cryptographic key ($K_S$, $K_P$).

6. Method according to claim 5, wherein the cryptographic key is a shared key known to the workflow management system (1).

7. Method according to claim 5, wherein the cryptographic key is a private signature key ($K_S$) of which a corresponding public signature verification key ($K_P$) is known to the workflow management system (1).

8. Method according to claim 1 further comprising performing a process (65) within the workflow management system (1).

9. Method according to claim 8 further comprising providing access to the process (65) of the workflow management system (1) via the device (51, 52, 53).

10. A computer program comprising program code means for performing the method of any of the claims 1 to 9 when said program is run on a computer.

11. A computer program product comprising program code means stored on a computer readable medium for performing the method of any of the claims 1 to 9 when said program product is run on a computer.

12. A system for confirming the fulfillment of a transition condition (10, 11, 12) in a workflow management system (1), the system comprising:

   a server (60) connected to a network (2) for performing a process (65) of the workflow management system (1) in which the transition condition (10, 11, 12) comprising an application transition condition (20, 21, 22) and a fulfillment condition (30, 31, 32), the fulfillment condition (30, 31, 32) comprising a requirement of a signature (35, 36, 37) for confirming the application transition condition (20, 21, 22); and
   a device (51, 52, 53) connected to the network (2) for accessing the process (65) and confirming at least part of the fulfillment of the application transition condition (20, 21, 22) by signing with the signature (35, 36, 37) that the application transition condition (20, 21, 22) has been fulfilled.

13. System according to claim 12, wherein the server (60) stores an access control list (40, 41, 42) comprising values that represent a person who has to sign the application transition condition (20, 21, 22).

14. System according to claim 12, wherein the device (51, 52, 53) is a mobile device for sending the signature (35, 36, 37) to the server (60) of the workflow management system (1).

**Fig. 1**

1

10

65

20

ATC$_1$, ATC$_2$

①

40

ACL [Mr. X, Mr. Y]

③

②

① completed
&
② completed
&
ATC$_1$ signed
&
ATC$_2$ signed

30

$Sig_{K_s}(ATC_1, ATC_2)$ + Cert$_{Mr.X}$

M$_X$

35

**Fig. 2**

ATC$_1$, ATC$_2$ — 21

4 → ACL [BV or TPV] — 41 → 5

④ completed
&
ATC$_1$ signed &
ATC$_2$ signed — 31

11

65

M$_{BV}$

36 — Sig$_{K_s}$(ATC$_1$, ATC$_2$) +Cert$_{BV}$ — M$_{BV}$

**Fig. 3**

ATC$_1$, ATC$_2$ — 21

ATC — 22

65

4 → ACL [BVorTVP] — 41 → ACL [AV] — 42 → 5

④ completed &
ATC$_1$ signed &
ATC$_2$ signed — 31

④ completed
&
ATC signed — 32

11

12

M$_{BV}$

M$_{AV}$

M$_{BV}$ — Sig$_{K_s}$(ATC$_1$, ATC$_2$) +Cert$_{BV}$

36

Sig$_{K_s}$(ATC$_1$) +Cert$_{AV}$ — M$_{AV}$

37

**Fig. 4**

EP 1 274 055 A1

**European Patent Office**

## EUROPEAN SEARCH REPORT

Application Number

EP 01 81 0659

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 1 003 139 A (VISA INT SERVICE ASS) 24 May 2000 (2000-05-24) * column 7, line 35-47 * * column 17, line 40-43 * * column 18, line 25-29 * * column 20, line 23-54 * * column 21, line 30-47 * * column 28, line 48 - column 29, line 7 * | 1-14 | G07F19/00 |
| X | FR 2 795 897 A (SCHLUMBERGER SYSTEMS & SERVICE) 5 January 2001 (2001-01-05) * page 2, line 1-25 * * page 3, line 12 - page 4, line 29; claims 1-14 * | 1-4, 10-14 | |
| | | | TECHNICAL FIELDS SEARCHED (Int.Cl.7) G07F |

The present search report has been drawn up for all claims

| Place of search | Date of completion of the search | Examiner |
|---|---|---|
| MUNICH | 22 November 2001 | Beauce, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

10

**ANNEX TO THE EUROPEAN SEARCH REPORT
ON EUROPEAN PATENT APPLICATION NO.**                    EP 01 81 0659

This annex lists the patent family members relating to the patent documents cited in the above-mentioned European search report.
The members are as contained in the European Patent Office EDP file on
The European Patent Office is in no way liable for these particulars which are merely given for the purpose of information.

22-11-2001

| Patent document cited in search report | | Publication date | Patent family member(s) | | Publication date |
|---|---|---|---|---|---|
| EP 1003139 | A | 24-05-2000 | US | 6282522 B1 | 28-08-2001 |
| | | | EP | 1003139 A2 | 24-05-2000 |
| | | | AU | 7272698 A | 24-11-1998 |
| | | | EP | 1023705 A1 | 02-08-2000 |
| | | | WO | 9849658 A1 | 05-11-1998 |
| | | | US | 6105008 A | 15-08-2000 |
| FR 2795897 | A | 05-01-2001 | FR | 2795897 A1 | 05-01-2001 |

EPO FORM P0459

For more details about this annex : see Official Journal of the European Patent Office, No. 12/82